# EUROPEAN PATENT APPLICATION

(11) **EP 4 790 561 A1**
(43) Date of publication of application: **12.08.2026**
(21) Application number: 25215597.3
(22) Date of filing: 13.11.2025
(51) Int. Cl.: G06F 11/20, G06F 11/16

(54) **FAULT PROCESSING METHOD AND APPARATUS FOR STORAGE SYSTEM**

(30) Priority: 10.02.2025 CN 202510147536
(71) Applicant: Beijing Volcano Engine Technology Co., Ltd., Beijing 100190 (CN)
(72) Inventor: Zhao, Yu, Beijing, 100028 (CN)
(74) Representative: Grünecker Patent- und Rechtsanwälte PartG mbB

(57) **Abstract**

The present application relates to a fault processing method for a storage system. The method includes: periodically obtaining a snapshot file of a first cluster and loading the snapshot file into a second cluster; obtaining a first log file from the first cluster after detecting that the first cluster fails, wherein the first log file is used to record a data operation on the first cluster; comparing the first log file with a snapshot file of the first cluster in the last period to obtain a first incremental file added in the first log file compared with the backup file; loading the first incremental file into the second cluster; and switching an access point of a target service from the first cluster to the second cluster, wherein the target service includes a service running in the first cluster before the first cluster fails.

## Description

### BACKGROUND

At present, with the development of cloud computing, many services start to use storage systems to store and manage key information required for service operation.

At present, when a storage system fails, a common fault processing method is to switch a service from a failed original storage system to a backup storage system. However, in the prior art, on the one hand, the recovery time objective (RTO) of the prior art is long, and it takes a long time to switch the service from the original storage system to the backup storage system so that the service can resume running; on the other hand, the recovery point objective (RPO) of the prior art is long, and the backup storage system may only be restored to the state of the original storage system a long time ago.

Therefore, how to reduce the RTO and RPO duration when the storage system fails is a problem that needs to be solved at present.

### SUMMARY

In order to solve the above technical problem, the present application provides a fault processing method and apparatus for a storage system, which are used to quickly resume a service to normal when the storage system fails.

In order to achieve the above objective, the present application provides the following technical solutions:

In a first aspect, a fault processing method for a storage system is provided, and the method includes: periodically obtaining a snapshot file of a first cluster and loading the snapshot file into a second cluster, wherein the first cluster and the second cluster are storage systems of the same type; obtaining a first log file from the first cluster after it is detected that the first cluster fails, wherein the first log file is used to record a data operation on the first cluster; comparing the first log file with a snapshot file of the first cluster in the last period to obtain a first incremental file added in the first log file compared with the snapshot file of the first cluster in the last period; loading the first incremental file into the second cluster; and switching an access point of a target service from the first cluster to the second cluster, wherein the target service includes a service running in the first cluster before the first cluster fails.

In some implementations, the loading the snapshot file into the second cluster includes: comparing a first snapshot file with a second snapshot file to obtain a second incremental file added in the first snapshot file compared with the second snapshot file, wherein the first snapshot file is a snapshot file corresponding to the first cluster in a current period, and the second snapshot file is a snapshot file in an immediately previous period compared with the first snapshot file; and loading the second incremental file into the second cluster.

In some implementations, the obtaining a first log file from the first cluster after it is detected that the first cluster fails includes: after it is detected that the first cluster fails, reading log files recorded in a plurality of nodes in the first cluster to obtain a plurality of log file copies; and determining the first log file according to the plurality of log file copies, wherein the first log file includes a file part recorded in each of the plurality of log file copies.

In some implementations, the obtaining a first log file from the first cluster after it is detected that the first cluster fails includes: after it is detected that the first cluster fails, reading log files recorded in a plurality of nodes in the first cluster to obtain a plurality of log file copies; and determining the first log file according to the plurality of log file copies, wherein the first log file includes a file part recorded in each of the plurality of log file copies and a different file part respectively included in each of the plurality of log file copies.

In some implementations, the obtaining a first log file from the first cluster after it is detected that the first cluster fails includes: after it is detected that the first cluster fails, reading log files recorded in a plurality of nodes in the first cluster to obtain a plurality of log file copies; displaying a different file part respectively included in each of the plurality of log file copies in an operation interface; and determining the first log file based on a first operation of a user on the operation interface, wherein the first operation is used to indicate selecting a target different file part from the different file part respectively included in each of the plurality of log file copies, and the first log file includes a file part recorded in each of the plurality of log file copies and the target different file part.

In some implementations, the first cluster and the second cluster are deployed in different container management clusters; or the first cluster and the second cluster are deployed in different physical machines in the same container management cluster.

In some implementations, the container management cluster is a kubernetes cluster.

In some implementations, the first cluster and the second cluster are eted clusters of the same version.

In a second aspect, a fault processing apparatus for a storage system is provided, and the apparatus includes: a loading unit, configured to periodically obtain a snapshot file of a first cluster and load the snapshot file into a second cluster, wherein the first cluster and the second cluster are storage systems of the same type; an obtaining unit, configured to obtain a first log file from the first cluster after it is detected that the first cluster fails, wherein the first log file is used to record a data operation on the first cluster; a comparison unit, configured to compare the first log file with a snapshot file of the first cluster in the last period to obtain a first incremental file added in the first log file compared with the snapshot file of the first cluster in the last period; the loading unit is further configured to load the first incremental file into the second cluster; and a switching unit, configured to switch an access point of a target service from the first cluster to the second cluster, wherein the target service includes a service running in the first cluster before the first cluster fails.

In some implementations, the loading the snapshot file into the second cluster includes: comparing a first snapshot file with a second snapshot file to obtain a second incremental file added in the first snapshot file compared with the second snapshot file, wherein the first snapshot file is a snapshot file corresponding to the first cluster in a current period, and the second snapshot file is a snapshot file in an immediately previous period compared with the first snapshot file; and loading the second incremental file into the second cluster.

In some implementations, the obtaining unit configured to obtain the first log file from the first cluster after it is detected that the first cluster fails includes: the obtaining unit configured to, after it is detected that the first cluster fails, read log files recorded in a plurality of nodes in the first cluster to obtain a plurality of log file copies; and the obtaining unit is further configured to determine the first log file according to the plurality of log file copies, wherein the first log file includes a file part recorded in each of the plurality of log file copies.

In some implementations, the obtaining unit configured to obtain the first log file from the first cluster after it is detected that the first cluster fails includes: the obtaining unit configured to, after it is detected that the first cluster fails, read log files recorded in a plurality of nodes in the first cluster to obtain a plurality of log file copies; and the obtaining unit is further configured to determine the first log file according to the plurality of log file copies, wherein the first log file includes a file part recorded in each of the plurality of log file copies and a different file part respectively included in each of the plurality of log file copies.

In some implementations, the obtaining unit configured to obtain the first log file from the first cluster after it is detected that the first cluster fails includes: the obtaining unit configured to, after it is detected that the first cluster fails, read log files recorded in a plurality of nodes in the first cluster to obtain a plurality of log file copies; the obtaining unit is further configured to display a different file part respectively included in each of the plurality of log file copies in an operation interface; and the obtaining unit is further configured to determine the first log file based on a first operation of a user on the operation interface, wherein the first operation is used to indicate selecting a target different file part from the different file part respectively included in each of the plurality of log file copies, and the first log file includes a file part recorded in each of the plurality of log file copies and the target different file part.

In some implementations, the first cluster and the second cluster are deployed in different container management clusters; or the first cluster and the second cluster are deployed in different physical machines in the same container management cluster.

In some implementations, the container management cluster is a kubernetes cluster.

In some implementations, the first cluster and the second cluster are eted clusters of the same version.

In a third aspect, an embodiment of the present application provides an electronic device, and the electronic device includes: a memory and a processor, wherein the memory is configured to store a computer program, and the processor is configured to, when executing the computer program, cause the electronic device to implement the fault processing method for a storage system according to any one of the above implementations.

In a fourth aspect, an embodiment of the present application provides a computer-readable storage medium, wherein a computer program is stored in the computer-readable storage medium, and the computer program, when executed by a computing device, causes the computing device to implement the fault processing method for a storage system according to any one of the above implementations.

In a fifth aspect, an embodiment of the present application provides a computer program product, and the computer program product, when running on a computer, causes the computer to implement the fault processing method for a storage system according to any one of the above implementations.

In the fault processing method for a storage system provided in the embodiments of the present application, on the one hand, in the method, a snapshot file of a first cluster is periodically obtained and the snapshot file is loaded into a second cluster, so that the second cluster may be created in advance and the first cluster and the second cluster are periodically synchronized when the first cluster is working normally. In this way, when the first cluster fails, because the snapshot file of the first cluster has been loaded into the second cluster at this time, the second cluster may replace the first cluster to take over a service in a short time, thereby reducing the recovery time objective (RTO). On the other hand, in the method, when the first cluster fails, a log file (referred to as a first log file) is first obtained from the failed first cluster, and a part (i.e., a first incremental file) in the first log file that has not been loaded into the second cluster is loaded into the second cluster, so that a state of data in the second cluster is closer to a state of data in the first cluster when the failure occurs, thereby reducing the recovery point objective (RPO). Further, in the method, the part (i.e., the first incremental file) in the first log file that has not been loaded into the second cluster is quickly determined by comparing the first log file with a snapshot file of the first cluster in the last period, thereby further reducing the RTO.

### BRIEF DESCRIPTION OF THE DRAWINGS

The drawings herein, which are incorporated into and constitute a part of this specification, illustrate embodiments consistent with the present application and, together with the description, serve to explain the principles of the present application.

In order to more clearly illustrate the technical solutions in the embodiments of the present application or in the prior art, the drawings required for describing the embodiments or the prior art will be briefly introduced below. It is obvious that, for persons of ordinary skill in the art, they may also acquire other drawings according to such drawings without paying any creative efforts.
Fig. 1 is a schematic diagram of a structure of an etcd cluster according to an embodiment of the present application;
Fig. 2 is a schematic diagram of a structure of a k8s cluster according to an embodiment of the present application;
Fig. 3 is a schematic diagram of a product form of a fault processing apparatus according to an embodiment of the present application;
Fig. 4 is a first schematic flowchart of a fault processing method according to an embodiment of the present application;
Fig. 5 is a second schematic flowchart of a fault processing method according to an embodiment of the present application;
Fig. 6 is a third schematic flowchart of a fault processing method according to an embodiment of the present application;
Fig. 7 is a first schematic diagram of a structure of a fault processing apparatus according to an embodiment of the present application; and
Fig. 8 is a second schematic diagram of a structure of a fault processing apparatus according to an embodiment of the present application.

### DETAILED DESCRIPTION OF EMBODIMENTS

In order to understand the above objectives, features and advantages of the present application more clearly, the solutions of the present application will be further described below. It should be noted that the embodiments of the present application and the features in the embodiments may be combined with each other without conflict.

Many specific details are set forth in the following description to facilitate a full understanding of the present application, but the present application may also be implemented in other ways different from those described herein. Obviously, the described embodiments are part of the embodiments of the present application, but not all of the embodiments.

First, related technologies involved in the embodiments of the present application are introduced:
A storage system refers to a system used to provide a data storage service.

A common storage system includes a distributed key-value storage system. In the distributed key-value storage system, key-value type data storage is adopted, and data in a plurality of internal storage nodes has consistency.

For example, common distributed key-value storage systems include an eted cluster, a zookeeper cluster, and the like. The name "etcd" comes from the "/etc" folder and "d" (i.e., distributed) systems of the uniplexed information and computing system (Unix). The "/etc" folder is a location used to store configuration data of a single system, and etcd is a large-scale distributed system. Therefore, "d" is added after "/etc" to form "eted". The Chinese literal translation of zookeeper is a zoo administrator, but in the context of computer science, its English original name is usually retained or it is simply referred to as ZK. Zookeeper is an open source distributed coordination service. It provides consistency services for distributed applications, such as configuration management, naming services, distributed synchronization, and group services.

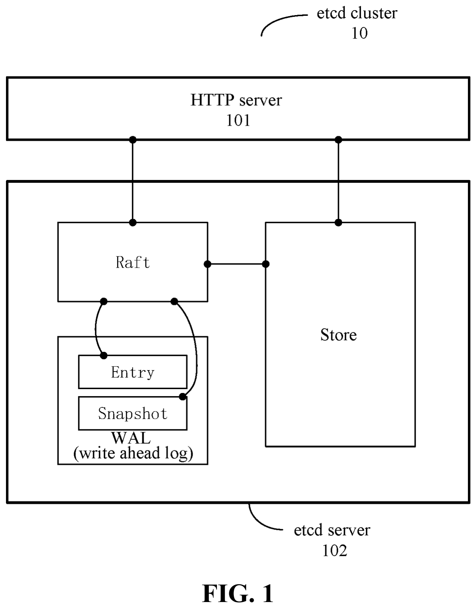

Exemplarily, Fig. 1 is a schematic diagram of a structure of an etcd cluster.

The etcd cluster 10 may include: a hyper text transfer protocol server (HTTP server) 101, and an etcd server 102.

The HTTP server 101 is configured to receive an application programming interface (API) request sent by a client, and receive a synchronization and heartbeat information request from another etcd node.

The etcd server 102 may use a Raft state machine to perform state transition based on a received raft message, and call an action in each state. Content of raft data may be written into a disk.

In addition, the etcd server 102 may use a write ahead log (WAL) to store a state of all data and an index of a node in a memory, and may further perform persistent storage through the WAL. In the WAL, a log is recorded in advance before all data is committed.

A snapshot is a state snapshot to prevent excessive data. An entry is specific stored log content.

Generally, after receiving a user request, the etcd cluster 10 forwards the user request to a Store module in the etcd server 102 via the HTTP server 101 for specific transaction processing. If node data modification is involved, a Raft module is responsible for state changing and log recording, and then the data is synchronized to another etcd node to confirm data committing, and finally the data is committed and synchronized again.

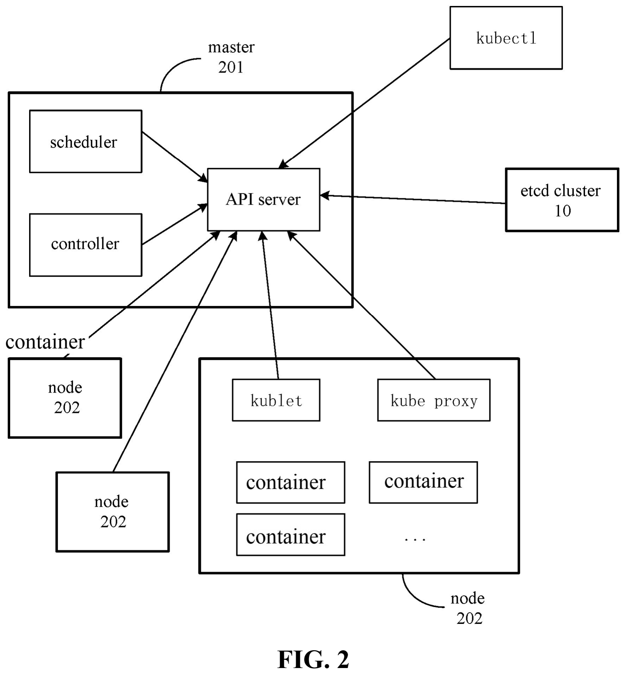

Exemplarily, in the case that key information of a kubernetes (abbreviated as k8s) cluster is stored by using the eted cluster, Fig. 2 is a schematic diagram of a structure of the k8s cluster.

The k8s cluster 20 includes: a master 201 and one or more nodes 202.

The master 201 is configured to implement a function of a control plane of the cluster, and is responsible for management of the cluster. An API server is a unique entry for resource operation, and is configured to receive a command entered by a user, and provide mechanisms such as authentication, authorization, API registration, and discovery. A scheduler is responsible for scheduling of cluster resources, and schedules a Pod to a corresponding node based on a predetermined scheduling policy. A controller is responsible for maintaining a state of the cluster, such as program deployment arrangement, fault detection, automatic scaling, and rolling update.

The node 202 is configured to implement a function of a data plane of the cluster, and is specifically responsible for providing a running environment for a container. Kubelet is responsible for maintaining a lifecycle of the container, including creating, updating, and destroying the container. Kube proxy is responsible for providing service discovery and load balancing inside the cluster.

In addition, kubectl is a command-line tool for the k8s cluster, and through kubectl, the cluster itself may be managed, and a containerized application may be installed and deployed on the cluster.

In addition, the k8s cluster may store information about various resource objects in the etcd cluster. For example, in Fig. 2, the k8s cluster 20 stores information about various resource objects in the etcd cluster 10. Specifically, once the kubernetes environment starts, the master 201 and the node 202 both store information about the master 201 and the node 202 into the etcd cluster 10.

In a practical application process, the etcd cluster 10 may run in the k8s cluster 20, for example, the etcd cluster 10 may run in a container of each node of the k8s cluster 20. In addition, the etcd cluster 10 may also run in another k8s cluster other than the k8s cluster 20.

The following describes the technical solutions provided in the embodiments of the present application with reference to examples:

In the related art, an etcd cluster is used as an example. When an etcd cluster (referred to as a first etcd cluster) fails, another eted cluster (referred to as a second etcd cluster) is first created, and then a snapshot file of the first eted cluster before the failure is loaded into the second etcd cluster, so that data in the second eted cluster is in the same state as data in the first etcd cluster at a time point corresponding to the snapshot file. Then, a service running on the first eted cluster is switched to the second eted cluster to resume running of the service.

Based on the related art described above, it is considered in the embodiments of the present application that: on the one hand, through the related art described above, a state of the second eted cluster may only be restored to a state of the first eted cluster at the time point corresponding to the snapshot file. If an interval of 1 hour is used to perform a snapshot task, the recovery point objective (RPO) of the related art described above is 1 hour. In other words, the RPO of the related art described above is long. On the other hand, in the related art described above, the second etcd cluster is created only after the first eted cluster fails, and the obtained snapshot file is loaded on the second eted cluster. Therefore, it takes a long time from when the first eted cluster fails to when the access point of the service is switched to the second eted cluster and the service running is resumed, that is, the recovery time objective (RTO) of the related art described above is long.

Therefore, an embodiment of the present application provides a fault processing method for a storage system. In the method, on the one hand, a snapshot file of a first cluster is periodically obtained and the snapshot file is loaded into a second cluster, so that the second cluster may be created in advance and the first cluster and the second cluster are periodically synchronized when the first cluster is working normally. In this way, when the first cluster fails, because the snapshot file of the first cluster has been loaded into the second cluster at this time, the second cluster may replace the first cluster to take over a service in a short time, thereby reducing the RTO. On the other hand, in the method, when the first cluster fails, a log file (referred to as a first log file) is first obtained from the failed first cluster, and a part (i.e., a first incremental file) in the first log file that has not been loaded into the second cluster is loaded into the second cluster, so that a state of data in the second cluster is closer to a state of data in the first cluster when the failure occurs, thereby reducing the RPO. Further, in the method, the part (i.e., the first incremental file) in the first log file that has not been loaded into the second cluster is quickly determined by comparing the first log file with a snapshot file of the first cluster in the last period, thereby further reducing the RTO.

An execution body of the method provided in the embodiments of the present application may be a fault processing apparatus. When the fault processing apparatus runs, the fault processing apparatus may be configured to perform all or some of the steps of the method provided in the embodiments of the present application.

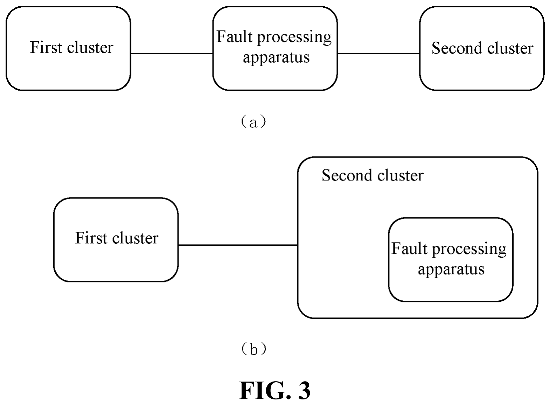

In some implementations, as shown in (a) of Fig. 3, a function of the fault processing apparatus may be implemented by software and/or hardware independent of the first cluster (i.e., the storage system that fails) and the second cluster (i.e., the storage system that takes over the service of the first cluster). In some other implementation processes, as shown in (b) of Fig. 3, the fault processing apparatus may also run in the second cluster. In this case, the fault processing apparatus may be used as a functional model of software and/or hardware in the second cluster. A specific form of the fault processing apparatus is not limited in the embodiments of the present application.

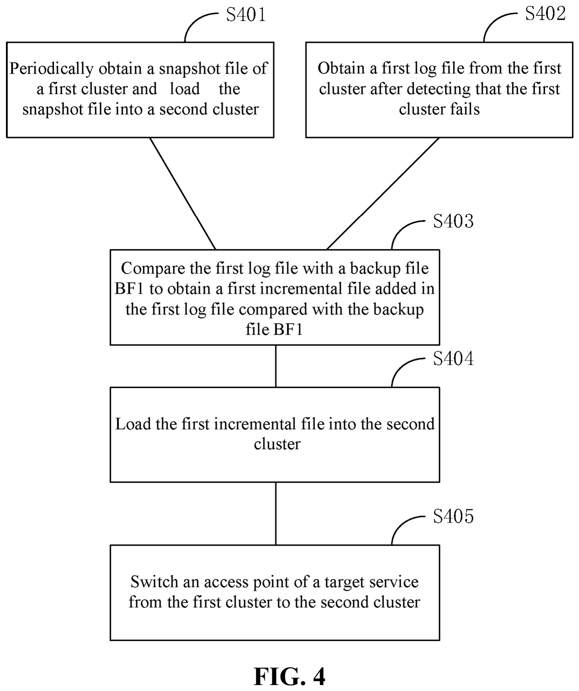

Specifically, as shown in Fig. 4, the method provided in the embodiments of the present application may include the following steps.

S401: The fault processing apparatus periodically obtains a snapshot file of the first cluster and loads the snapshot file into the second cluster.

The first cluster and the second cluster are storage systems of the same type. Specifically, the first cluster and the second cluster may be storage systems that are the same in one or more of function, framework, or version, so that a service may run normally after the service is switched from the first cluster to the second cluster.

Specifically, the first cluster and the second cluster may be distributed key-value storage systems of the same version. For example, the first cluster and the second cluster may be etcd clusters of the same version. For another example, the first cluster and the second cluster may be zookeeper clusters of the same version.

For example, a periodical task may be set in the first cluster, so that a snapshot task is performed on the first cluster at intervals of a preset duration, to obtain a snapshot file corresponding to the first cluster in each period. On the other hand, the fault processing apparatus may periodically read the snapshot file corresponding to the first cluster in each period based on the preset duration.

Exemplarily, after obtaining the snapshot file through the snapshot task, the first cluster may store the snapshot file in a public cloud object storage to ensure highly reliable storage of the snapshot file. Correspondingly, the fault processing apparatus may periodically read, from the public cloud, the snapshot file corresponding to the first cluster in each period.

It may be understood that a duration of the period for performing S401 may be determined based on a practical application requirement. For example, the duration of the period may be 1 hour, 6 hours, or 12 hours. The duration of the period for performing S401 is not limited in the embodiments of the present application.

In the method, the second cluster may be periodically updated by using the snapshot file of the first cluster, so that the data in the second cluster at least includes the data in the first cluster at a time point corresponding to the last snapshot, thereby reducing the duration of the RTO.

In addition, in some implementations, in the embodiments of the present application, the first cluster and the second cluster may be deployed in an anti-affinity manner, to reduce a probability that the first cluster and the second cluster fail at the same time.

The first cluster and the second cluster may be deployed in different container management clusters.

For example, in the case that both the first cluster and the second cluster are deployed in a k8s manner, the first cluster and the second cluster may be deployed in different k8s clusters.

On the other hand, the first cluster and the second cluster may be deployed in different physical machines in the same container management cluster.

For example, in the case that both the first cluster and the second cluster are deployed in the k8s manner, the first cluster and the second cluster may be deployed in different physical machines in a k8s cluster. The different physical machines may be physical machines in different racks, physical machines in different computer rooms, and the like.

S402: The fault processing apparatus obtains a first log file from the first cluster after detecting that the first cluster fails.

The first log file is used to record a data operation on the first cluster.

When the first cluster and the second cluster may be etcd clusters of the same version, the first log file may be a raft file.

The failure of the first cluster in S402 may be specifically various failures that cause slow service response of the first cluster or make the first cluster unavailable.

For example, when the first cluster is an eted cluster, the failure in S402 may specifically include any one of failure types shown in the following table:

**Table 1**

| Failure type | Failure impact scope | Failure consequence |
|---|---|---|
| Physical machine failure of a single node of the etcd cluster (including: memory, CPU, system disk failure, etc.) | A single node in the etcd cluster | Slow service response |
| Physical machine failure of a plurality of nodes of the etcd cluster (including: memory, CPU, system disk failure, etc.) | A plurality of nodes in the etcd cluster | Unavailability of the etcd cluster |
| Local disk failure of a plurality of nodes of the etcd cluster | A plurality of nodes in the etcd cluster | Slow read and write of the etcd cluster or unavailability of read and write (slow service response, or unavailability of the etcd cluster) |
| Failure of a kubelet or a container corresponding to the etcd cluster in the k8s cluster | One or more nodes in the etcd cluster | Slow service response or unavailability of the etcd cluster |
| Eviction of a Pod corresponding to the etcd cluster in the k8s cluster | One or more nodes in the etcd cluster | Unavailability of the etcd cluster |
| Failure of a master of the k8s cluster running the etcd cluster | The entire etcd cluster | Unavailability of the etcd cluster |

The first log file may specifically include a raft log corresponding to each data operation on the first cluster. The raft log includes information such as a key and a value of written data, and operation content (for example, put, update, insert, or delete).

S403: The fault processing apparatus compares the first log file with a snapshot file of the first cluster in the last period (referred to as a backup file BF1 for short hereinafter), to obtain a first incremental file added in the first log file compared with the backup file BF1.

Exemplarily, if the first log file includes: a log entry 1, a log entry 2, a log entry 3, a log entry 4, and a log entry 5, and the backup file BF1 includes: the log entry 1 and the log entry 2, the first incremental file includes: the log entry 3, the log entry 4, and the log entry 5.

S404: The fault processing apparatus loads the first incremental file into the second cluster.

In the method, the second cluster is created in advance and the backup file is loaded into the second cluster, so that when the first log file is loaded into the second cluster, only the first incremental file with a small data volume needs to be loaded into the second cluster, thereby reducing the time of the RTO. In the foregoing possible implementation, it is considered that in the case where the second cluster is periodically updated through the content of S401 (i.e., the snapshot file of the first cluster is periodically obtained and the snapshot file is loaded into the second cluster), the snapshot file obtained in the last period may be used as the log file in the first cluster that has been loaded into the second cluster to compare the first log file with the backup file. In this way, the part (i.e., the first incremental file) in the first log file that has not been loaded into the second cluster may be more conveniently determined.

S405: The fault processing apparatus switches an access point of a target service from the first cluster to the second cluster.

The target service includes a service running in the first cluster before the first cluster fails.

In the foregoing method in the embodiments of the present application, on the one hand, in the method, the snapshot file of the first cluster is periodically obtained and the snapshot file is loaded into the second cluster, so that the second cluster may be created in advance and the first cluster and the second cluster are periodically synchronized when the first cluster is working normally. In this way, when the first cluster fails, because the snapshot file of the first cluster has been loaded into the second cluster at this time, the second cluster may replace the first cluster to take over the service in a short time, thereby reducing the recovery time objective (RTO). On the other hand, in the method, when the first cluster fails, the log file (referred to as the first log file) is first obtained from the failed first cluster, and the part (i.e., the first incremental file) in the first log file that has not been loaded into the second cluster is loaded into the second cluster, so that the state of the data in the second cluster is closer to the state of the data in the first cluster when the failure occurs, thereby reducing the recovery point objective (RPO). Further, in the method, the part (i.e., the first incremental file) in the first log file that has not been loaded into the second cluster is quickly determined by comparing the first log file with the snapshot file of the first cluster in the last period, thereby further reducing the RTO.

In addition, it is considered that in the process of performing S402 to obtain the first log file from the first cluster, a plurality of different log file copies may be obtained from a plurality of nodes of the first cluster. In this case, the plurality of log file copies need to be processed to obtain the first log file that needs to be loaded into the second cluster. The following describes the specific implementation process of S402 in three implementations.

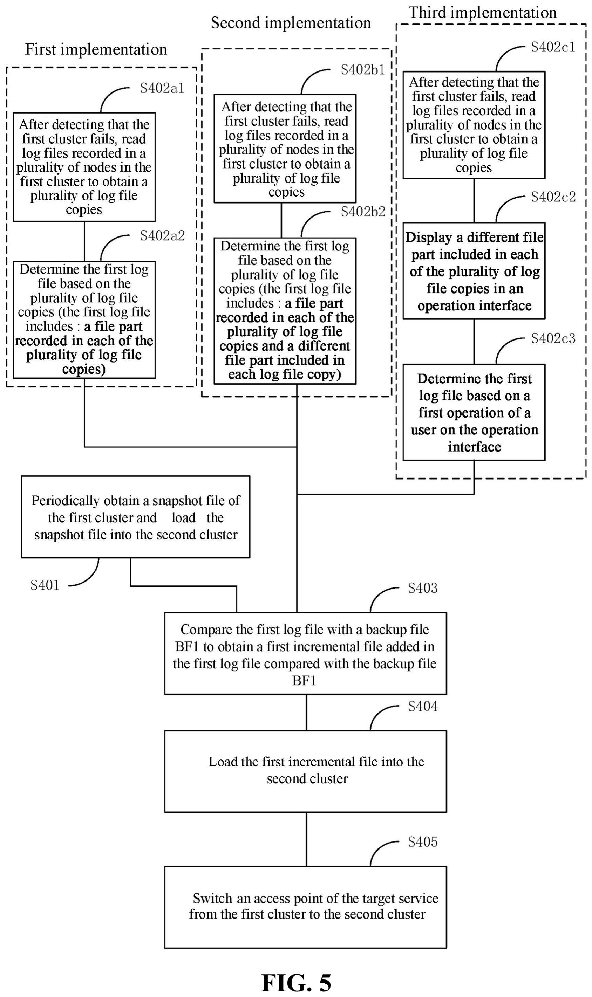

As shown in Fig. 5, in the first implementation, S402 may specifically include the following steps.

S402a1: The fault processing apparatus reads log files recorded in a plurality of nodes in the first cluster after detecting that the first cluster fails, to obtain a plurality of log file copies.

The plurality of log file copies may respectively include raft files obtained from different nodes.

S402a2: The fault processing apparatus determines the first log file based on the plurality of log file copies.

The first log file includes a file part recorded in each of the plurality of log file copies.

Exemplarily, the fault processing apparatus obtains three log file copies, namely, a log file copy a, a log file copy b, and a log file copy c, through S402a1.

The log file copy a includes a log entry 1, a log entry 2, a log entry 3, a log entry 4, and a log entry 5. Each log entry may be used to record information such as a key, a value, and operation content that correspond to one user operation. In addition, the log file copy b includes the log entry 1, the log entry 2, and the log entry 3. The log file copy c includes the log entry 1, the log entry 2, the log entry 3, and the log entry 4.

It may be learned that the file part recorded in each of the three log file copies includes: the log entry 1, the log entry 2, and the log entry 3. Therefore, the first log file obtained through S402a2 includes the log entry 1, the log entry 2, and the log entry 3.

In other words, with the content of S402a1-S402a2, a different file part that is different from other log file copies in the plurality of log file copies may be deleted, and the file part recorded in each of the plurality of remaining log file copies is used as the first log file. This may reduce a probability that a data consistency failure occurs in the second cluster after the second cluster loads the first log file.

In the second implementation, S402 may specifically include the following steps.

S402b1: The fault processing apparatus reads log files recorded in a plurality of nodes in the first cluster after detecting that the first cluster fails, to obtain a plurality of log file copies.

The plurality of log file copies may respectively include raft files obtained from different nodes.

S402b2: The fault processing apparatus determines the first log file based on the plurality of log file copies.

The first log file includes a file part recorded in each of the plurality of log file copies and a different file part respectively included in each of the plurality of log file copies.

Exemplarily, still use the foregoing log file copy a, log file copy b, and log file copy c as an example. The log file copy a includes a log entry 1, a log entry 2, a log entry 3, a log entry 4, and a log entry 5. The log file copy b includes the log entry 1, the log entry 2, and the log entry 3. The log file copy c includes the log entry 1, the log entry 2, the log entry 3, and the log entry 4.

After the fault processing apparatus obtains the foregoing three log file copies through S402b1, because the log file copy a includes a different file part: the log entry 4 and the log entry 5, and the log file copy c includes a different file part: the log entry 4, and the file part recorded in each of the three log file copies includes: the log entry 1, the log entry 2, and the log entry 3.

Therefore, the first log file obtained through S402b2 includes: the log entry 1, the log entry 2, the log entry 3, the log entry 4, and the log entry 5.

In other words, with the content of S402b1-S402b2, the different file part in each log file copy may be retained and used as the first log file. In this way, as much data as possible stored in the first cluster may be retained, so that the data in the second cluster is more complete, to facilitate the quick service recovery.

In the third implementation, S402 may specifically include the following steps.

S402c1: The fault processing apparatus reads log files recorded in a plurality of nodes in the first cluster after detecting that the first cluster fails, to obtain a plurality of log file copies.

The plurality of log file copies may respectively include raft files obtained from different nodes.

S402c2: The fault processing apparatus displays a different file part respectively included in each of the plurality of log file copies in an operation interface.

For example, the fault processing apparatus may include a display, or the fault processing apparatus may be connected to a display in a wired or wireless manner. Further, the fault processing apparatus may display the different file part respectively included in each of the plurality of log file copies in the operation interface of the display.

Exemplarily, still use the foregoing log file copy a, log file copy b, and log file copy c as an example.

After obtaining the log file copy a, the log file copy b, and the log file copy c, the fault processing apparatus may determine the different file part respectively included in each log file copy. The log file copy a includes a different file part: the log entry 4 and the log entry 5, and the log file copy c includes a different file part: the log entry 4. Further, the fault processing apparatus may display the different file part (the log entry 4 and the log entry 5) included in the log file copy a and the different file part (the log entry 4) included in the log file copy c in the operation interface of the display.

S402c3: The fault processing apparatus determines the first log file based on a first operation of a user on the operation interface.

The first operation is used to indicate selecting a target different file part from the different file part respectively included in each of the plurality of log file copies.

The first log file includes a file part recorded in each of the plurality of log file copies and the target different file part.

For example, after the fault processing apparatus may display the different file part (the log entry 4 and the log entry 5) included in the log file copy a and the different file part (the log entry 4) included in the log file copy c in the operation interface of the display, the user (for example, a system operation and maintenance personnel) may select the target different file part from the log entry 4 and the log entry 5 through the first operation on the operation interface (for example, the first operation may be an operation such as clicking or dragging on the target different file part). Assuming that the target different file part includes the log entry 4, the fault processing apparatus determines that the first log file includes: the log entry 1, the log entry 2, the log entry 3, and the log entry 4.

In other words, with the content of S402c1-S402c3, the content of the first log file may be determined based on the operation of the user. This may make the content of the log file loaded into the second cluster more flexible, to facilitate the quick service recovery.

In addition, in some possible designs, the loading the snapshot file into the second cluster in S401 may specifically include the following steps.

S4011: A first snapshot file is compared with a second snapshot file to obtain an incremental file (referred to as a second incremental file) added in the first snapshot file compared with the second snapshot file.

The first snapshot file is a snapshot file corresponding to the first cluster in a current period, and the second snapshot file is a snapshot file in an immediately previous period compared with the first snapshot file.

S4012: The second incremental file is loaded into the second cluster.

In the foregoing design, the second snapshot file added in the first snapshot file compared with the second snapshot file may be determined by comparing snapshot files (i.e., the first snapshot file and the second snapshot file) in two adjacent periods, and then only the second incremental file needs to be written into the backup file, to achieve the effect of loading the first snapshot file into the second cluster.

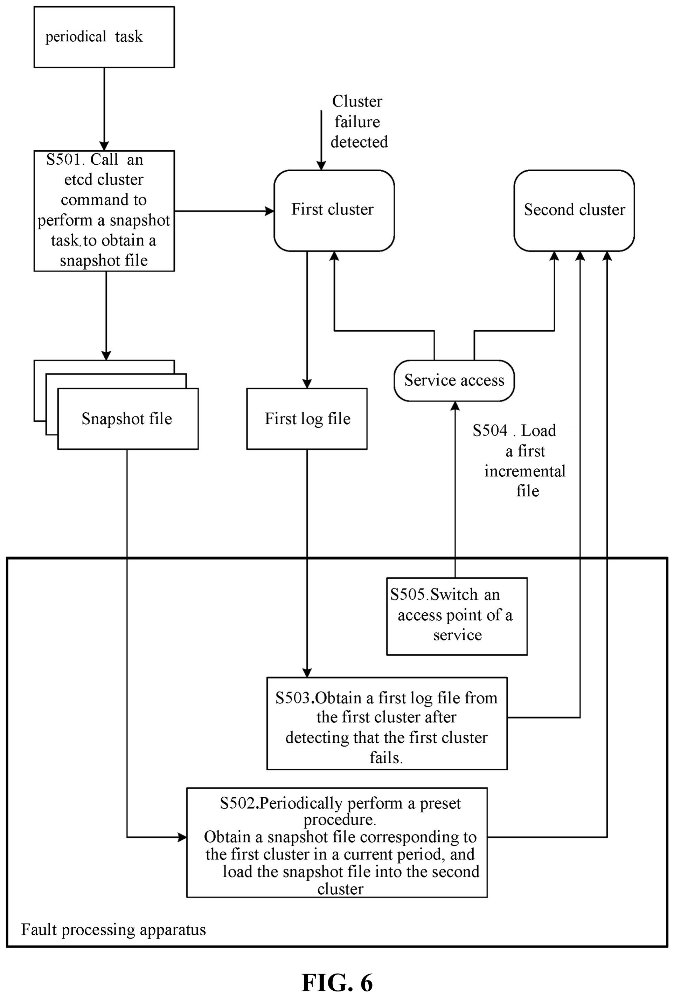

The following uses an example to describe execution processes of the first cluster, the second cluster, and the fault processing apparatus in the case where the method provided in the embodiments of the present application is applied, wherein the first cluster and the second cluster are eted clusters. Specifically, as shown in Fig. 6, the method may include the following steps.

S501: The first cluster periodically performs a snapshot task to obtain a snapshot file.

For example, a periodical task may be set in the first cluster, and an etcd cluster command is called every preset duration to perform the snapshot task, to obtain the snapshot file.

After generating the snapshot file every time, the first cluster may use a public object storage to store the snapshot file with high reliability.

S502: The fault processing apparatus periodically performs a preset procedure.

The preset procedure includes: obtaining a snapshot file corresponding to the first cluster in a current period, and loading the snapshot file into the second cluster.

For the specific implementation process of S502, refer to the implementation process of S401.

In addition, in the case where the first cluster fails, the method further includes the following steps.

S503: The fault processing apparatus obtains a first log file from the first cluster after detecting that the first cluster fails.

The first log file is used to record a modification operation for data in the first cluster. Specifically, the first log file may be a raft file.

For the specific implementation process of S503, refer to the implementation process of S402.

S504: The fault processing apparatus loads the first log file into the second cluster.

For the specific implementation process of S504, refer to the implementation processes of S403-S404.

S505: The fault processing apparatus switches an access point of a service from the first cluster to the second cluster.

For the specific implementation process of S505, refer to the implementation process of S405.

Based on the same inventive concept, as an implementation of the foregoing method, an embodiment of the present application further provides a fault processing apparatus. This embodiment corresponds to the foregoing method embodiment. For ease of reading, details in the foregoing method embodiment are not described one by one in this embodiment, but it should be clear that the fault processing apparatus in this embodiment may correspondingly implement all the content in the foregoing method embodiment.

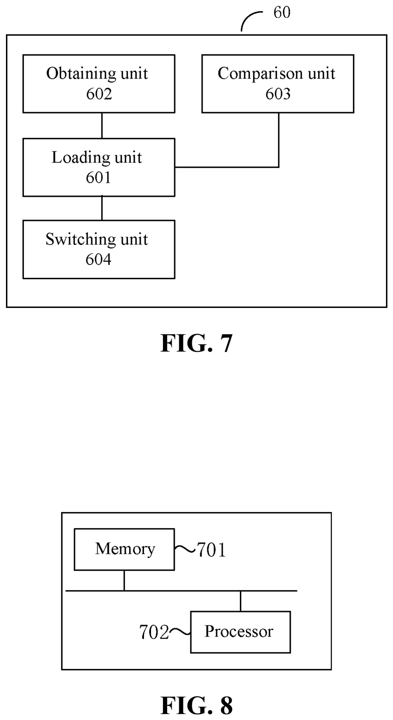

An embodiment of the present application provides a fault processing apparatus for a storage system. Fig. 7 is a schematic diagram of a structure of the fault processing apparatus. As shown in Fig. 7, the data processing apparatus 60 includes:
a loading unit 601, configured to periodically obtain a snapshot file of a first cluster and load the snapshot file into a second cluster, wherein the first cluster and the second cluster are storage systems of the same type;
an obtaining unit 602, configured to obtain a first log file from the first cluster after detecting that the first cluster fails, wherein the first log file is used to record a data operation on the first cluster;
a comparison unit 603, configured to compare the first log file with a snapshot file of the first cluster in the last period to obtain a first incremental file added in the first log file compared with the snapshot file of the first cluster in the last period;
the loading unit 601 is further configured to load the first incremental file into the second cluster; and
a switching unit 604, configured to switch an access point of a target service from the first cluster to the second cluster, wherein the target service includes a service running in the first cluster before the first cluster fails.

In some implementations, the loading the snapshot file into the second cluster includes: comparing a first snapshot file with a second snapshot file to obtain a second incremental file added in the first snapshot file compared with the second snapshot file, wherein the first snapshot file is a snapshot file corresponding to the first cluster in a current period, and the second snapshot file is a snapshot file in an immediately previous period compared with the first snapshot file; and loading the second incremental file into the second cluster.

In some implementations, the obtaining unit 602 configured to obtain the first log file from the first cluster after detecting that the first cluster fails includes:
the obtaining unit 602 configured to read log files recorded in a plurality of nodes in the first cluster after detecting that the first cluster fails, to obtain a plurality of log file copies; and
the obtaining unit 602 is further configured to determine the first log file according to the plurality of log file copies, wherein the first log file includes a file part recorded in each of the plurality of log file copies.

In some implementations, the obtaining unit 602 configured to obtain the first log file from the first cluster after detecting that the first cluster fails includes:
the obtaining unit 602 configured to read log files recorded in a plurality of nodes in the first cluster after detecting that the first cluster fails, to obtain a plurality of log file copies; and
the obtaining unit 602 is further configured to determine the first log file according to the plurality of log file copies, wherein the first log file includes a file part recorded in each of the plurality of log file copies and a different file part respectively included in each of the plurality of log file copies.

In some implementations, the obtaining unit 602 configured to obtain the first log file from the first cluster after detecting that the first cluster fails includes:
the obtaining unit 602 configured to read log files recorded in a plurality of nodes in the first cluster after detecting that the first cluster fails, to obtain a plurality of log file copies;
the obtaining unit 602 is further configured to display a different file part respectively included in each of the plurality of log file copies in an operation interface; and
the obtaining unit 602 is further configured to determine a first log file based on a first operation of a user on the operation interface, wherein the first operation is used to indicate selecting a target different file part from the different file part respectively included in each of the plurality of log file copies, and the first log file includes a file part recorded in each of the plurality of log file copies and the target different file part.

In some implementations, the first cluster and the second cluster are deployed in different container management clusters; or the first cluster and the second cluster are deployed in different physical machines in the same container management cluster.

In some implementations, the container management cluster is a kubernetes cluster.

In some implementations, the first cluster and the second cluster are eted clusters of the same version.

The fault processing apparatus 60 provided in the embodiments of the present application may perform the fault processing method provided in any one of the foregoing embodiments by using the same implementation principle and producing the same technical effect, which are not repeated here.

Based on the same inventive concept, an embodiment of the present application further provides an electronic device. Fig. 8 is a schematic diagram of a structure of an electronic device according to an embodiment of the present application. As shown in Fig. 8, the electronic device provided in this embodiment includes: a memory 701 and a processor 702, wherein the memory 701 is configured to store a computer program, and the processor 702 is configured to, when executing the computer program, perform the fault processing method for any storage system provided in the foregoing embodiments.

Based on the same inventive concept, an embodiment of the present application further provides a computer-readable storage medium. A computer program is stored in the computer-readable storage medium, and when the computer program is executed by a processor, the computing device is caused to implement the fault processing method for any storage system provided in the foregoing embodiments.

Based on the same inventive concept, an embodiment of the present application further provides a computer program product, and when the computer program product runs on a computer, the computing device is caused to implement the fault processing method for any storage system provided in the foregoing embodiments.

Persons skilled in the art should understand that the embodiments of the present application may be provided as a method, a system, or a computer program product. Therefore, the present application may take a form of an entire hardware embodiment, an entire software embodiment, or an embodiment containing both hardware and software elements. Moreover, the present application may take a form of a computer program product implemented on one or more computer-usable storage media having computer-usable program code embodied therein.

The processor may be a central processing unit (CPU), or may be another general-purpose processor, a digital signal processor (DSP), an application specific integrated circuit (ASIC), a field-programmable gate array (FPGA) or another programmable logic device, a discrete gate or transistor logic device, a discrete hardware component, or the like. The general-purpose processor may be a microprocessor, or the processor may be any conventional processor or the like.

The memory may include a non-permanent memory, a random access memory (RAM), and/or a nonvolatile memory in a computer-readable medium, such as a read-only memory (ROM) or a flash memory (flash RAM). The memory is an example of the computer-readable medium.

The computer-readable medium includes permanent and non-permanent, removable and non-removable storage media. For the storage medium, information storage may be implemented by using any method or technology, and the information may be computer-readable instructions, a data structure, a module of a program, or other data. Examples of the computer storage medium include, but are not limited to, a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disk (DVD) or another optical storage, a cassette tape, disk storage or another magnetic storage device, or any other non-transmission medium, which may be used to store information that may be accessed by a computing device. According to the definition herein, the computer-readable medium does not include transitory media such as a modulated data signal and a carrier.

It should be noted that the foregoing embodiments are merely examples for describing the technical solutions of the present application, but are not intended to limit the present application. Although the present application is described in detail with reference to the foregoing embodiments, persons of ordinary skill in the art should understand that they may still make modifications to the technical solutions recited in the foregoing embodiments, or make equivalent replacements to some or all of the technical features thereof. And these modifications or replacements do not make the essence of the corresponding technical solutions depart from the scope of the technical solutions of the embodiments of the present application.

Although the embodiments of the present disclosure are described in combination with the drawings, those skilled in the art may make various modifications and variations without departing from the spirit and scope of the present disclosure, and such modifications and variations fall within the scope defined by the appended claims.

## Claims

1. A fault processing method for a storage system, comprising:
periodically obtaining (S401) a snapshot file of a first cluster and loading the snapshot file into a second cluster, the first cluster and the second cluster being storage systems of a same type;
obtaining (S402) a first log file from the first cluster after detecting that the first cluster fails, the first log file being used to record a data operation on the first cluster;
comparing (S403) the first log file with a snapshot file of the first cluster in a last period to obtain a first incremental file added in the first log file compared with the snapshot file of the first cluster in the last period;
loading (S404) the first incremental file into the second cluster; and
switching (S405) an access point of a target service from the first cluster to the second cluster, the target service comprising a service running in the first cluster before the first cluster fails.

2. The method of claim 1, wherein loading the snapshot file into the second cluster comprises:
comparing a first snapshot file with a second snapshot file to obtain a second incremental file added in the first snapshot file compared with the second snapshot file, wherein the first snapshot file is a snapshot file corresponding to the first cluster in a current period, and the second snapshot file is a snapshot file in an immediately previous period compared with the first snapshot file; and
loading the second incremental file into the second cluster.

3. The method of any of claims 1-2, wherein obtaining the first log file from the first cluster after detecting that the first cluster fails comprises:
after detecting that the first cluster fails, reading (S402a1) log files recorded in a plurality of nodes in the first cluster to obtain a plurality of log file copies; and
determining (S402a2) the first log file according to the plurality of log file copies, wherein the first log file comprises a file part recorded in each of the plurality of log file copies.

4. The method of any of claims 1-2, wherein obtaining the first log file from the first cluster after detecting that the first cluster fails comprises:
after detecting that the first cluster fails, reading (S402b1) log files recorded in a plurality of nodes in the first cluster to obtain a plurality of log file copies; and
determining (S402b2) the first log file according to the plurality of log file copies, wherein the first log file comprises a file part recorded in each of the plurality of log file copies and a different file part respectively comprised in each of the plurality of log file copies.

5. The method of any of claims 1-2, wherein obtaining the first log file from the first cluster after detecting that the first cluster fails comprises:
after detecting that the first cluster fails, reading (S402c1) log files recorded in a plurality of nodes in the first cluster to obtain a plurality of log file copies;
displaying (S402c2), in an operation interface, a different file part respectively comprised in each of the plurality of log file copies; and
determining (S402c3) the first log file based on a first operation of a user on the operation interface, wherein the first operation is used to indicate selecting a target different file part from the different file part respectively comprised in each of the plurality of log file copies, and the first log file comprises a file part recorded in each of the plurality of log file copies and the target different file part.

6. The method of any of claims 1-2, wherein
the first cluster and the second cluster are deployed in different container management clusters; or
the first cluster and the second cluster are deployed in different physical machines in a same container management cluster.

7. A fault processing apparatus (60) for a storage system, comprising:
a loading unit (601), configured to periodically obtain a snapshot file of a first cluster and load the snapshot file into a second cluster, the first cluster and the second cluster being storage systems of a same type;
an obtaining unit (602), configured to obtain a first log file from the first cluster after detecting that the first cluster fails, the first log file being used to record a data operation on the first cluster;
a comparison unit (603), configured to compare the first log file with a snapshot file of the first cluster in a last period to obtain a first incremental file added in the first log file compared with the snapshot file of the first cluster in the last period;
the loading unit (601) is further configured to load the first incremental file into the second cluster; and
a switching unit (604), configured to switch an access point of a target service from the first cluster to the second cluster, the target service comprising a service running in the first cluster before the first cluster fails.

8. An electronic device, comprising: a memory (701) and a processor (702), wherein the memory (701) is configured to store a computer program configured to, when executing the computer program, cause the electronic device to implement the fault processing method for a storage system of any of claims 1-6.

9. A computer-readable storage medium having a computer program stored therein, wherein the computer program, when executed by a computing device, causes the computing device to implement the fault processing method for a storage system of any of claims 1-6.

10. A computer program product, wherein the computer program product, when running on a computer, causes the computer to implement the fault processing method for a storage system of any of claims 1-6.
